# DEMANDE DE BREVET EUROPEEN

(11) **EP 4 557 541 A1**
(43) Date de publication de la demande: **21.05.2025**
(21) Numéro de dépôt: 24201183.1
(22) Date de dépôt: 18.09.2024
(51) Int. Cl.: H02G 3/08, H02G 3/14, H02G 3/18, H02G 3/12, H01R 13/447, H01R 13/52

(54) **DISPOSITIF DE CLOTURE ETANCHE D'UN BOITIER A MULTIPRISE ELECTRIQUE D'EQUIPEMENT D'UNE PAROI D'UN MEUBLE, MUNI D'UN COUVERCLE ESCAMOTABLE**

(30) Priorité: 16.11.2023 FR 2312576
(71) Demandeur: Societe Financiere Veron (Sofive), 83700 Saint Raphaël (FR)
(72) Inventeur: VERON, Stéphane, 83700 Saint Raphaël (FR)
(74) Mandataire: Macquet, Christophe

(57) **Abrégé**

L'invention a pour objet un dispositif de jonction étanche entre un boîtier (1) électrique et un couvercle (2) plan qui est escamotable via un mécanisme (3) logé à l'intérieur du boîtier (1). Le couvercle (2) est composé d'une plaque supérieure (5a), d'une plaque inférieure (5c) et d'un joint d'étanchéité (5b). Le joint d'étanchéité (5c) intègre un premier corps de joint (6a) appliqué contre le boîtier (1) à distance d'un deuxième corps de joint (6b) appliqué contre la plaque supérieure (5a), et une membrane (8) qui s'étend en compression entre la plaque supérieure (5a) et la plaque inférieure (5c).

## Description

### DOMAINE DE L'INVENTION

L'invention relève du domaine des prises électriques équipant une paroi d'un meuble, tel que notamment un plan de travail mobilier - table, bureau ou banc d'atelier par exemple - pour connecter un appareil à alimenter en énergie électrique. Plus spécifiquement, l'invention relève des modalités de clôture étanche d'un boîtier encastrable à l'intérieur d'une paroi d'un meuble, qui loge une ou plusieurs prises électriques et qui comporte un couvercle escamotable de fermeture du boîtier.

### ART ANTERIEUR

Il est courant d'équiper un meuble d'un ou de plusieurs boîtiers encastrables qui logent une ou plusieurs prises électriques. Le boîtier est installé à l'intérieur d'un logement que comporte une paroi du meuble, tel que fréquemment pour exemple un plan de travail mobilier. La ou les prises logées à l'intérieur du boîtier peuvent être des prises électriques délivrant une énergie électrique de puissance et/ou délivrant des signaux de commande, telle que des prises électriques de types à broches et/ou des prises à ports USB par exemple.

Il est connu d'organiser le boîtier selon deux stations alternatives, à partir de manoeuvres du boîtier qui sont sélectivement opérées par un individu. Selon une station de clôture du boîtier, le boîtier est verrouillé en une position interdisant un accès à la ou les prises qu'il loge. Selon une station alternative d'ouverture du boîtier, un accès de connexion à la ou aux prises électriques par un individu est autorisé.

Selon une méthode spécifique, une manoeuvre du boîtier depuis sa station de clôture vers sa station d'ouverture est opérée par l'individu exerçant une pression contre un poussoir. Le poussoir est monté élastiquement mobile sur le boîtier en étant accessible depuis l'extérieur du meuble. Lorsque le poussoir est soumis à pression par un individu, un mécanisme logé à l'intérieur du boîtier provoque le passage du boîtier depuis sa position de clôture vers sa position d'ouverture. On pourra à ce propos se reporter aux documents US2002127897 (SHARPLES STANLEY) et FR3022699 (SOCIETE FINANCIERE VERON SOFIVE). Selon le document US2002127897, le boîtier en station de clôture est escamoté à l'intérieur d'un logement que comporte une paroi d'un meuble. En station d'ouverture, le boîtier émerge partiellement hors de ladite paroi en procurant un accès à des organes de connexion reliés à une prise logée à l'intérieur du boîtier.

La présente invention se réfère plus spécifiquement au document FR3022699, selon lequel le boîtier loge au moins une prise, et de préférence plus spécifiquement une multiprise. Le boîtier ménage dans son volume intérieur des alvéoles de réceptions respectives des prises, qui sont réparties de part et d'autre d'un axe médian d'extension du boîtier.

Le boîtier comporte une paroi périphérique d'emboîtement à l'intérieur du logement de la paroi d'un meuble qui le reçoit, tel que par exemple un plan de travail mobilier, une paroi latérale - ou joue - du meuble, voire aussi une cloison intérieure du meuble. La paroi périphérique du boîtier intègre à son extrémité supérieure une collerette de prise d'appui contre la paroi du meuble logeant le boîtier.

Le boîtier est équipé d'un couvercle globalement plan de fermeture du boîtier en station de clôture. L'extrémité supérieure de la paroi périphérique du boîtier ménage à l'intérieur du boîtier une chambre de réception du couvercle qui est ouverte vers l'extérieur du boîtier, en ménageant un débouché du boîtier vers son environnement extérieur. En station de clôture du boîtier, le couvercle en position de fermeture est placé suivant son plan d'extension au débouché du boîtier, en affleurant la face supérieure de la collerette qu'il comporte. Le couvercle est ainsi accessible depuis l'extérieur de la paroi du meuble qui loge le boîtier, pour permettre à un individu de le déplacer en position de dégagement du débouché du boîtier, et ainsi accéder à la ou aux prises logées à l'intérieur du boîtier.

Selon une autre particularité du boîtier décrite par le document FR3022699, le couvercle est constitutif d'un poussoir d'activation d'un mécanisme de manoeuvre du couvercle, qui s'étend à l'intérieur du boîtier coaxial à l'axe d'extension du boîtier. Le couvercle est monté mobile sur le boîtier entre la station de clôture et la station d'ouverture du boîtier, suivant un axe de mobilité coaxial à l'axe d'extension du boîtier et donc à l'axe d'extension du mécanisme de manoeuvre.

Plus précisément, le couvercle est monté mobile sur le boîtier entre une position de fermeture du couvercle en station de clôture du boîtier et une position de dégagement du couvercle en station d'ouverture du boîtier. Le couvercle est monté mobile sur le boîtier en étant déplaçable suivant son axe de mobilité à la fois en pivotement et axialement entre sa position de fermeture et sa position de dégagement. En position de fermeture, le couvercle obture le débouché du boîtier. En position de dégagement, le couvercle est extrait suivant son axe de mobilité hors du boîtier qu'il surplombe, en étant orienté perpendiculairement à sa position de fermeture pour procurer un accès aux prises logées à l'intérieur du boîtier.

Par suite d'une pression exercée en zone centrale sur le couvercle par un individu, l'activation du mécanisme provoque le passage du couvercle suivant son axe de mobilité depuis sa position de fermeture vers sa position dégagement, en procurant à l'individu - à travers le débouché du boîtier - un accès aux prises logées à l'intérieur du boîtier. Pour déplacer le couvercle depuis sa position de dégagement vers sa position de fermeture, l'individu manoeuvre manuellement le couvercle suivant son axe de mobilité inversement en pivotement et en translation, le couvercle étant alors maintenu par le mécanisme en position de fermeture.

A cet effet, le mécanisme comporte synthétiquement un ressort et des organes crantés rotatifs coopérants entre eux, dont un fût d'activation du mécanisme via lequel le couvercle est déplacé depuis sa position de fermeture vers sa position de dégagement et inversement. Le couvercle intègre un organe de poussée, qui provoque par poussée contre le fût d'activation
- ) d'une part l'activation du mécanisme provoquant un déplacement du couvercle depuis sa position de fermeture vers sa position de dégagement, par suite d'une détente du ressort et de la coopération en rotation entre les organes crantés, et
- ) d'autre part une manoeuvre inverse du mécanisme par un individu provoquant un déplacement du couvercle depuis sa position de dégagement vers sa position de fermeture, par suite d'une compression du ressort et une mise en rotation inverse des organes crantés coopérants entre eux en rotation. Dans ce contexte, un problème à résoudre est de procurer une étanchéité à l'encontre d'une infiltration d'humidité et/ou d'un liquide - ou encore potentiellement de poussières - à l'intérieur du boîtier en station de clôture. En effet, la conformation du couvercle épouse la conformation du débouché du boîtier ouvert sur la chambre de réception du couvercle lorsqu'il est déplacé en translation, sous l'effet d'une pression exercée par un individu sur le couvercle pour
activer le mécanisme déplaçant le couvercle vers sa position de dégagement.

Cependant en station de clôture du boîtier, un inévitable interstice est ménagé entre le couvercle et ladite chambre, pour ne pas faire obstacle à la mise en mobilité du couvercle entre sa position de fermeture et sa position de dégagement. La présence d'un tel interstice ménage inopportunément un passage à travers lequel de l'humidité, un liquide et/ou des poussières peuvent être introduits à l'intérieur du boîtier. Ceci est particulièrement préjudiciable en présence d'un matériel électrique installé à l'intérieur du boîtier, tel que notamment une ou plusieurs prises électriques et leur câble d'alimentation en énergie électrique depuis l'extérieur du boîtier.

### RESUME DE L'INVENTION

La démarche de la présente invention s'inscrit dans le contexte d'un perfectionnement d'un boîtier encastrable qui loge au moins une prise électrique, tel qu'un boîtier encastrable du type de celui décrit par le document FR3022699.

Le boîtier est notamment du type équipé d'un couvercle globalement plan qui est installé coplanaire à un débouché du boîtier vers son environnement extérieur ménageant un accès à la ou les prises logées à l'intérieur du boîtier. Le couvercle est monté mobile sur le boîtier entre une position de fermeture du couvercle dans laquelle le débouché du boîtier est obturé par le couvercle - le boîtier étant alors en station de clôture - et une position de dégagement du couvercle - le boîtier étant alors en station d'ouverture - dans laquelle le débouché du boîtier est ouvert vers son environnement extérieur en procurant un accès à une ou plusieurs prises qu'il loge.

Le couvercle est constitutif d'un poussoir d'activation d'un mécanisme à ressort et à organes crantés rotatifs coopérants entre eux, provoquant un déplacement du couvercle depuis sa position de fermeture vers sa position de dégagement. Le déplacement du couvercle vers sa position de dégagement est opéré - via le mécanisme - suivant un axe de mobilité du couvercle coaxial à un axe d'extension dudit mécanisme, concomitamment en élévation en surplomb du boîtier puis en pivotement.

Dans ce contexte l'invention a pour objet un dispositif d'étanchéité du boîtier en station de clôture, via le couvercle dont il est équipé.

Le but de l'invention est de procurer une jonction étanche entre le couvercle et le débouché du boîtier qui le loge en station de clôture du boîtier, nonobstant le montage mobile du couvercle sur le boîtier entre sa position de fermeture et sa position de dégagement.

Il est plus spécifiquement visé par l'invention de surmonter au moins les difficultés suivantes d'obtention d'une telle jonction étanche :
- ) qui soit fiable et efficace sans affecter l'ergonomie du boîtier au regard des modalités de son fonctionnement, notamment en ce qui concerne l'agencement du couvercle en poussoir d'activation du mécanisme logé à l'intérieur du boîtier, la faculté de mise en mobilité du couvercle par le mécanisme entre sa position de fermeture et sa position de dégagement, et un maintien du couvercle en position de fermeture par le mécanisme procurant une étanchéité efficace du boîtier,
- ) qui soit contrôlable pour limiter les contraintes supportées par les moyens d'étanchéité mis en oeuvre pour l'obtention d'une telle jonction étanche et/ou par les organes que comporte le mécanisme de mise en mobilité du couvercle,
- ) qui soit pérenne malgré les mises en mobilité du couvercle qui sont effectués par un individu à fréquences régulières potentiellement soutenues,
- ) qui soit structurellement simple et aisée à adapter pour équiper un quelconque boîtier du type susvisé, comportant essentiellement pour rappel un couvercle monté mobile sur le boîtier en étant constitutif d'un poussoir d'activation d'un mécanisme de manoeuvre du couvercle depuis sa position de fermeture vers sa position de dégagement, et de maintien du couvercle en position de fermeture,
- ) dont la structure ne fait pas obstacle au positionnement correct du couvercle au débouché du boîtier lorsque le couvercle est déplacé en position de fermeture,
- ) qui permette d'éviter un accroissement de l'encombrement du boîtier, pour ne pas faire obstacle à son emboîtement à l'intérieur d'un logement de plus faibles dimensions possibles, tel qu'un logement ménagé à travers une paroi d'un meuble, notamment un plan de travail réputé encombré par divers appareils et/ou objets, et/ou
- ) qui soit applicable à un boîtier logeant une ou plusieurs prises, notamment en permettant son obtention indépendamment de la position relative entre un axe médian d'extension verticale du boîtier et l'axe de mobilité du couvercle coaxial à l'axe d'extension du mécanisme de manoeuvre du couvercle entre sa position de fermeture et sa position de dégagement.

Pour ce faire, l'invention a pour objet un dispositif de jonction étanche entre un boîtier comportant dans son volume intérieur au moins un logement d'une prise électrique, et un couvercle escamotable. Le couvercle est installé à un débouché d'une chambre supérieure du boîtier ouverte sur l'environnement extérieur du boîtier, débouché autorisant un accès à la ou les prises logées dons le boîtier. Le boîtier comporte une collerette d'application du boîtier contre une paroi en bordure d'un logement de réception du boîtier que comporte la paroi. Le couvercle est monté mobile sur le boîtier entre une position de fermeture du débouché du boîtier interdisant un accès à la ou les prises, et une position de dégagement du débouché du boîtier en station d'ouverture du boîtier autorisant un accès à la ou les prises.

Le boîtier loge un mécanisme de manoeuvre du couvercle depuis sa position de fermeture vers sa position de dégagement. Le couvercle est déplaçable vers sa position de dégagement suivant un axe de mobilité coaxial à un axe d'extension du mécanisme de manoeuvre du couvercle, d'une part en élévation en étant disposé en surplomb du boîtier et d'autre part en pivotement en dégageant un accès à la ou les prises à travers le débouché du boîtier. Le couvercle est muni d'un organe de poussée coopérant suivant l'axe de mobilité du couvercle avec un fût d'activation du mécanisme sous l'effet d'une pression exercée par un individu contre la face supérieure du couvercle en position de fermeture.

Dans ce contexte, le dispositif de l'invention est reconnaissable en ce que le couvercle comprend deux plaques superposées, dont une plaque supérieure et une plaque inférieure, et un joint d'étanchéité monobloc en élastomère s'étendant en périphérie du couvercle. Le joint d'étanchéité intègre deux corps de joint distants l'un de l'autre suivant un plan d'extension du couvercle, dont un premier corps de joint appliqué contre le boîtier et un deuxième corps de joint appliqué contre la tranche périphérique de la plaque supérieure. Le joint d'étanchéité intègre en outre une membrane qui s'étend depuis le premier corps de joint vers le deuxième corps de joint. La membrane comporte un prolongement depuis le deuxième corps de joint qui s'étend entre la plaque supérieure et la plaque inférieure.

D'autres caractéristiques spécifiques du dispositif de l'invention - non restrictives ni limitatives au regard d'autres caractéristiques qu'il peut présenter - sont les suivantes.

Avantageusement, le joint d'étanchéité est constitutif d'un organe d'assemblage par scellement entre la plaque supérieure et la plaque inférieure, le prolongement que comporte la membrane étant scellé à l'une et l'autre de la plaque supérieure et de la plaque inférieure. Le couvercle composé au moins de la plaque supérieure, de la plaque inférieure et du joint d'étanchéité forme un bloc cohésif manoeuvrable en un tout entre la position de de fermeture et la position de dégagement du couvercle.

Selon un agencement structurel spécifique du joint d'étanchéité, le premier corps de joint est avantageusement conformé en une feuillure en équerre en comportant au moins un épaulement de prise d'appui vertical du premier corps de joint en bordure de la collerette que comporte le boîtier et une aile de retour. L'épaulement du premier corps de joint est avantageusement prolongé par l'aile de retour, qui s'étend vers l'intérieur de la chambre à distance de la paroi du boîtier suivant un le plan d'extension du couvercle. L'aile de retour intègre la membrane à sa périphérie en zone médiane de l'extension verticale de l'aile de retour. Le deuxième corps de joint comporte au moins un flasque qui est avantageusement incliné en direction de l'axe de mobilité du couvercle depuis sa base à laquelle la membrane est intégrée. Le premier corps de joint et le deuxième corps de joint sont transversalement séparés à distance l'un de l'autre suivant le plan d'extension du couvercle, avantageusement par une gorge que comporte le joint d'étanchéité et qui est ménagée entre eux en surplomb de la plaque inférieure du couvercle. Selon une forme avantageuse de réalisation du dispositif, La plaque inférieure s'étend en soutien de la membrane vers le premier corps de joint contre lequel la plaque inférieure est appliquée suivant le plan d'extension du couvercle.

Plus spécifiquement, Le joint d'étanchéité est avantageusement scellé conjointement à la plaque supérieure et à la plaque inférieure du couvercle d'une part par scellement du deuxième corps de joint contre la tranche de la plaque supérieure, et d'autre part par scellement du prolongement de la membrane à la plaque supérieure et à la plaque inférieure du couvercle entre lesquelles le prolongement de la membrane est comprimé et scellé. Avantageusement, la plaque supérieure intègre des organes de centrage du joint d'étanchéité sur le couvercle, qui traversent verticalement le prolongement de la membrane via des ouvertures qu'il comporte et qui sont de formes complémentaires à celles des organes de centrage. Les organes de centrage s'étendent verticalement vers la plaque inférieure contre laquelle les organes de centrage sont appliqués. Les organes de centrage dont l'extension verticale détermine la distance de séparation verticale entre la plaque supérieure et la plaque inférieure, sont au moins constitutifs d'un moyen de calibrage de la compression de la membrane entre la plaque supérieure et la plaque inférieure à un seuil de compression prédéfini.

Ledit seuil de compression est équilibré entre une compression du prolongement de la membrane d'une part suffisamment efficace en procurant une immobilisation ferme du joint d'étanchéité le maintenant en position entre les plaques, et d'autre part une compression modérée préservant le joint d'étanchéité de manière pérenne.

On notera aussi que les organes de centrage sont avantageusement constitutifs d'organes de renfort du couvercle, la plaque supérieure et la plaque inférieure scellées entre elles via la membrane prenant en outre appui l'une contre l'autre suivant l'axe de mobilité du couvercle. Plus spécifiquement, la plaque supérieure et la plaque inférieure forment conjointement une armature de renfort global du joint d'étanchéité, par prise d'appui direct de la plaque supérieure verticalement contre la plaque inférieure et par un prolongement de la plaque inférieure suivant le plan d'extension du couvercle vers le premier corps de joint contre lequel la plaque inférieure est appliquée.

De préférence, la plaque supérieure intègre l'organe de poussée équipant le couvercle. La plaque inférieure et la membrane comportent notamment au moins des fenêtres respectives qui sont superposées et qui ménagent un passage de l'organe de poussée verticalement à leurs travers. La dimension d'extension des fenêtres suivant le plan d'extension du couvercle en position de fermeture, est de préférence supérieure à l'encombrement transversal du mécanisme de manoeuvre considéré parallèlement au plan d'extension du couvercle, étant compris au moins en position de fermeture notamment.

Selon une forme avantageuse de réalisation, le fût d'activation comporte en périphérie de sa base une denture qui s'étend autour de l'axe de mobilité du couvercle et qui est composée d'une pluralité de dents dont les extrémités inférieures sont verticalement inclinées. Les dents coopèrent avec les crans d'un organe cranté que comporte le mécanisme. La denture est en outre constitutive d'un moyen de calibrage de la course du couvercle qui est bornée entre une application ferme du joint d'étanchéité verticalement contre le boîtier et une émergence minimale du couvercle hors du boîtier en position de dégagement du couvercle.

Autrement dit, les dents sont inclinées par rapport à l'axe de mobilité du couvercle suivant une faible pente de calibrage de la course du couvercle, qui est bornée entre une application ferme du joint d'étanchéité contre le boîtier et une émergence du couvercle hors du boîtier en position de dégagement qui est ajustée au plus juste - ou autrement dit suffisante - pour placer le couvercle hors du boîtier.

La plaque supérieure du couvercle comporte un relief en cuvette dimensionnée au doigt d'un individu, le relief en cuvette étant coaxial à l'axe de mobilité du couvercle.

### BREVE DESCRIPTION DES FIGURES

L'invention sera mieux comprise à la lecture de la description détaillée qui suit d'un exemple de réalisation, en relation avec les figures suivantes :

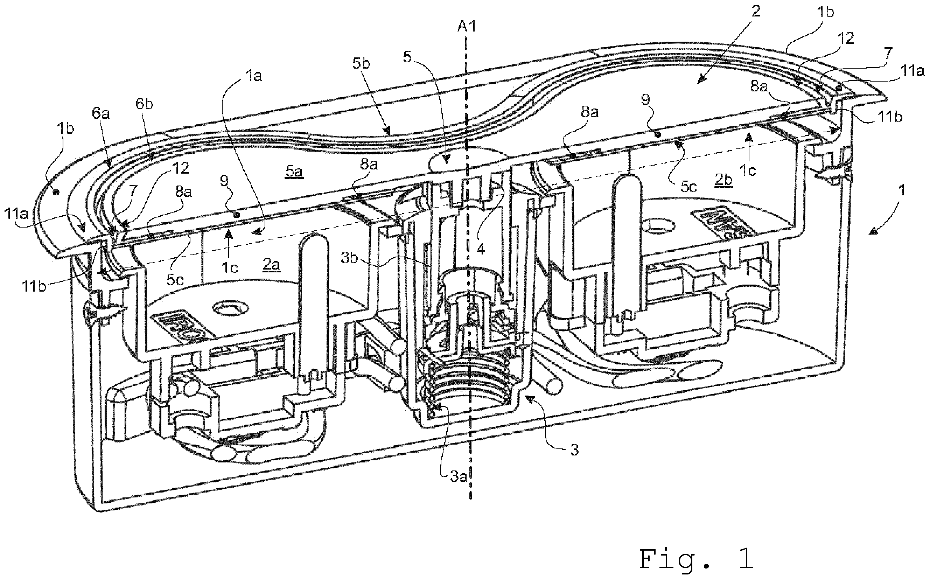

La Fig. 1 est une représentation en perspective longitudinale suivant un plan de coupe médian, d'un boîtier à multiprise électrique. Le boîtier est équipé d'un couvercle escamotable qui est manoeuvrable par un mécanisme de manoeuvre logé à l'intérieur du boîtier. Le couvercle est représenté en position de fermeture du boîtier placé en station de clôture. Un dispositif de jonction étanche conforme à l'invention est ménagé en interposition entre le couvercle et un débouché supérieur du boîtier.

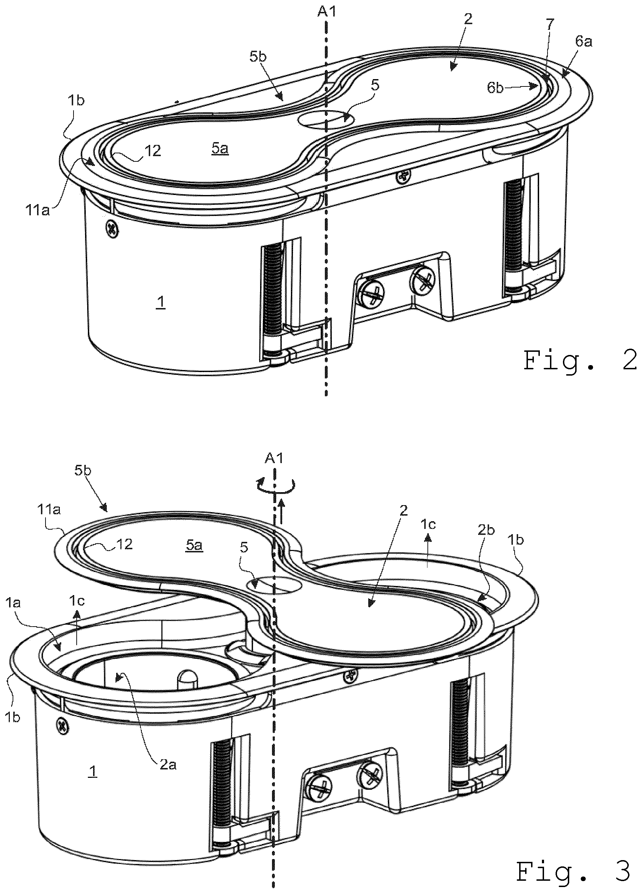

La Fig. 2 est une représentation en perspective longitudinale du boîtier et du couvercle illustrés sur la figure 1. Le couvercle est représenté en position de fermeture comme illustré sur la figure 1.

La Fig. 3 est une représentation en perspective longitudinale du boîtier et du couvercle illustrés sur les figures 1 et 2. Le couvercle est représenté en position de dégagement hors du boîtier placé en station d'ouverture, dans laquelle le couvercle est placé en surplomb du boîtier en étant orienté perpendiculairement à l'extension longitudinale du boîtier.

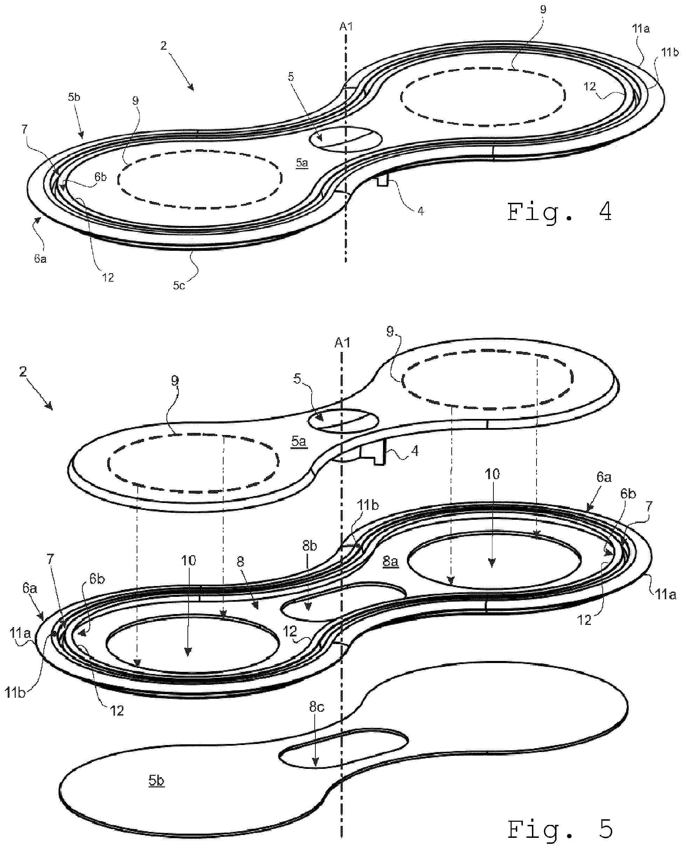

La Fig. 4 est une représentation en perspective de dessus du couvercle illustré sur les figures 1 à 3. Le couvercle - globalement plan - est composé d'une plaque supérieure, d'une plaque inférieure et d'un joint d'étanchéité comportant des corps de joints qui sont respectivement appliqués contre la plaque inférieure et la plaque supérieure en périphérie du couvercle.

La Fig. 5 est une représentation en perspective éclatée du couvercle illustré sur les figures 1 à 4, mettant en évidence les composants du couvercle.

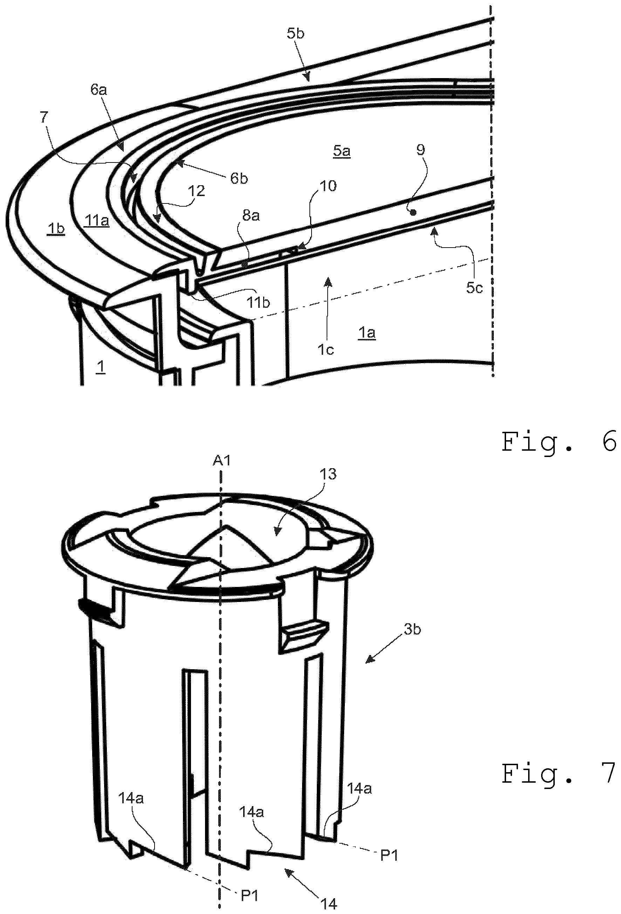

La Fig. 6 est une vue de détail en perspective du couvercle représenté sur les figures 1 à 5. Le couvercle est installé en position de fermeture sur le boîtier en station de clôture, tel qu'illustré sur les figures 1 et 2. La figure 6 illustre les modalités de jonction étanche entre le boîtier et le couvercle placé en position de fermeture.

La Fig. 7 est une représentation en perspective d'un fût d'activation que comporte le mécanisme de manoeuvre du couvercle illustré sur la figure 1, pour provoquer une mise en oeuvre du mécanisme de manoeuvre déplaçant le couvercle depuis sa position de fermeture vers sa position de dégagement.

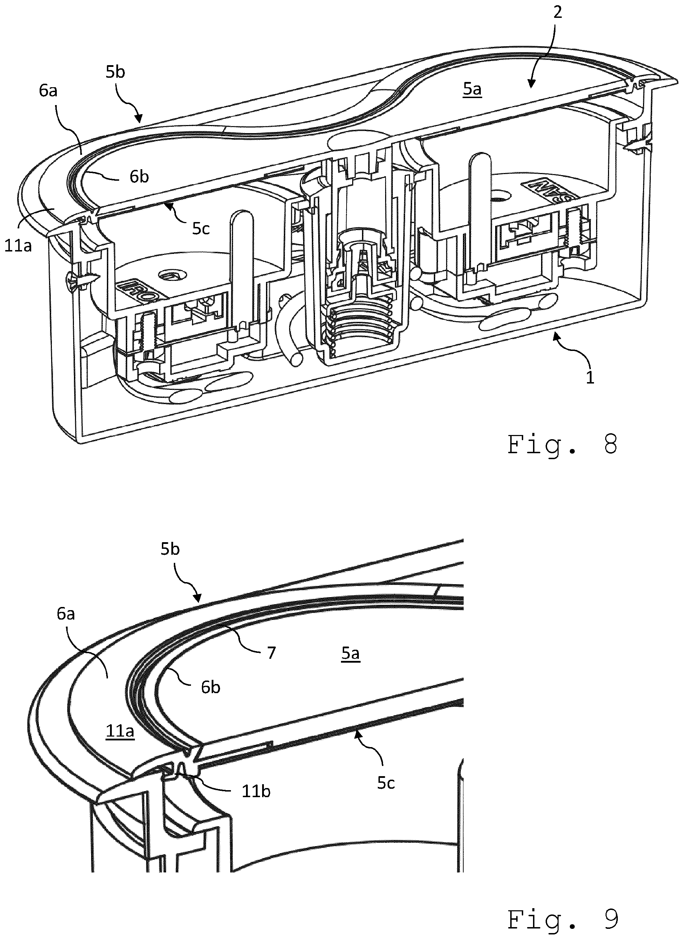

La Fig. 8 est une représentation en perspective longitudinale suivant un plan de coupe médian, d'un autre mode de réalisation du boîtier à multiprise électrique, qui présente une variante du dispositif de jonction, étanche, conforme à l'invention.

La Fig. 9 est une vue de détail en perspective du couvercle représenté sur la figure 8. Le couvercle est installé en position de fermeture sur le boîtier en station de clôture. La figure 9 illustre les modalités de jonction étanche entre le boîtier et le couvercle placé en position de fermeture, selon le mode de réalisation de la figure 8.

### DESCRIPTION DETAILLEE DE L'INVENTION

Les figures et leurs descriptions détaillées non limitatives, exposent l'invention selon des modalités particulières qui ne sont pas restrictives quant à la portée de l'invention. Les figures et leurs descriptions détaillées d'un exemple de réalisation de l'invention peuvent servir à mieux la définir, si besoin en relation avec la description générale qui vient d'en être faite. Par ailleurs pour éviter une surcharge des figures et ainsi faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures.

Sur la figure 1, un boîtier 1 à multiprise électrique comporte une enceinte et un couvercle 2 escamotable de conformation globalement plane. L'enceinte du boîtier 1 ménage à l'intérieur du boîtier 1 des logements 2a, 2b de réceptions respectives d'une ou de plusieurs prises électriques, non représentées pour ne pas alourdir la figure. L'enceinte du boîtier 1 loge aussi un mécanisme 3 de manoeuvre du couvercle 2, le mécanisme 3 s'étendant à l'intérieur du boîtier 1 verticalement suivant un axe de mobilité A1 du couvercle 2. Les logements 2a, 2b de réception des prises électriques qui leurs sont affectées sont disposées à l'intérieur du boîtier 1, en étant réparties à équidistance de part et d'autre de l'axe de mobilité A1 du couvercle 2 et donc de l'axe d'extension du mécanisme 3 définissant l'axe de mobilité A1 du couvercle 2. Le couvercle 2 est déplaçable par le mécanisme 3 depuis une position de fermeture - illustrée sur les figures 1 et 2 - vers une position de dégagement illustrée sur la figure 3.

Sur la figure 1, le mécanisme 3 comporte un ressort 3a et des organes crantés coopérants entre eux pour déplacer le couvercle 2 entre sa position de fermeture et sa position de dégagement. Les organes crantés comportent notamment un fût d'activation 3b du mécanisme 3 qui provoque le passage du couvercle 2 depuis sa position de fermeture vers sa position de dégagement, par suite d'une poussée initialement exercée par un individu contre le couvercle 2. Le couvercle 2 est alors déplacé vers l'intérieur du boîtier 1, ce qui provoque un déplacement du fût d'activation 3b et par suite une activation du mécanisme 3 provoquant la manoeuvre du couvercle 2 depuis sa position de fermeture vers sa position de dégagement.

Sur les figures 1 à 3, le boîtier 1 comporte une collerette 1b de prise d'appui contre une paroi - tel que notamment une paroi d'un meuble non représentée - qui comporte un logement de réception du boîtier 1. En position de fermeture du couvercle 2, le boîtier 1 est en station de clôture de son volume intérieur comme illustré sur les figures 1 et 2. En position de dégagement du couvercle 2 le boîtier 1, le boîtier 1 est en station d'ouverture comme illustré sur la figure 3, procurant à un individu un accès aux prises qu'il loge.

Plus visible sur la figure 3, le boîtier 1 comporte à son sommet une chambre 1a délimitant un débouché 1c du boîtier 1 vers son environnement extérieur. Comme illustré sur les figures 1 et 2, le couvercle 2 est conformé suivant son plan d'extension en corrélation avec la conformation de la chambre 1a et du débouché 1c du boîtier 1.

En station de clôture du boîtier 1, le couvercle 2 en position de fermeture est maintenu positionné suivant son plan d'extension à l'intérieur de la chambre 1a par le mécanisme 3 de manoeuvre, en étant coplanaire au débouché 1c du boîtier 1 qu'il affleure. En station d'ouverture du boîtier 1, le couvercle 2 s'étend suivant son plan d'extension en surplomb du boîtier 1 en étant orienté perpendiculairement à l'extension longitudinale du boîtier 1, ou autrement dit en étant orienté perpendiculairement par rapport à sa position de fermeture.

Tel qu'illustré sur la figure 1, le couvercle 2 intègre un organe de poussée 4 qui s'étend en contrebas du couvercle 2 suivant son axe de mobilité A1, et qui coopère avec le fût d'activation 3b que comporte le mécanisme 3, le fût d'activation 3b étant illustré individuellement plus en détail sur la figure 7.

En se reportant successivement à la figure 2 puis à la figure 3, le couvercle 2 est déplacé depuis sa position de fermeture vers sa position de dégagement, par suite d'une pression exercée par un individu sur le couvercle 2 suivant son axe de mobilité A1. Pour guider l'individu pour appliquer une pression idoine contre le couvercle 2 suivant son axe de mobilité A1, la face supérieure du couvercle 2 comporte - suivant l'axe de mobilité A1 du couvercle 2 - un relief conformé en cuvette 5 dimensionnée au doigt d'un individu illustré sur les figures 1 à 5.

Une pression exercée par l'individu contre le couvercle 2, provoque son refoulement depuis le débouché 1c du boîtier 1 vers l'intérieur de la chambre 1a. Le déplacement du couvercle 2 vers l'intérieur du boîtier 1 provoque une prise d'appui de l'organe de poussée 4 contre le fût d'activation 3b. Le fût d'activation 3b coopère avec l'organe cranté qui lui est affecté ce qui active le mécanisme 3. Le couvercle 2 est alors manoeuvré depuis sa position de fermeture illustrée sur les figures 1 et 2, vers sa position de dégagement illustrée sur la figure 3.

Comme illustré sur la figure 3, la manoeuvre du couvercle 2 par le mécanisme 3 provoque un déplacement du couvercle 2 depuis sa position de fermeture vers sa position de dégagement successivement suivant son axe de mobilité A1 :
- ) en élévation suivant l'axe de mobilité A1 du couvercle 2, via le mécanisme 3 qui repousse le couvercle 2 en surplomb du boîtier 1,
- ) puis ensuite en pivotement autour de l'axe de mobilité A1 du couvercle 2 selon une course de 90° (quatre-vingt-dix degrés). Une tolérance de débattement angulaire du couvercle 2 en position de dégagement peut être admise dès lors qu'elle ne fait pas obstacle à un accès par l'individu aux prises logées à l'intérieur du boîtier 1 placé en station d'ouverture.

Pour interdire une infiltration notamment d'humidité, d'un liquide ou de poussières à l'intérieur du boîtier 1 en station de clôture, il est proposé par l'invention un dispositif de jonction étanche entre le couvercle 2 et le boîtier 1. Le dispositif de jonction étanche associe notamment un agencement structurel spécifique du couvercle 2 et un agencement structurel spécifique de la face inférieure du fût d'activation 3b, tel que décrit plus loin en relation avec la figure 7.

A cet effet plus visible sur les figures 4 à 6, le couvercle 2 comporte trois composants, dont une plaque supérieure 5a intégrant l'organe de poussée 4, un joint d'étanchéité 5b monobloc élastiquement déformable en élastomère - à base de silicone notamment - et une plaque inférieure 5c.

La plaque supérieure 5a est superposée à la plaque inférieure 5c suivant l'axe de mobilité A1 du couvercle 2, le joint d'étanchéité 5b s'étendant en périphérie du couvercle 2 en interposition entre la plaque supérieure 5a et la plaque inférieure 5c. Le joint d'étanchéité 5b intègre deux corps de joint 6a, 6b distants l'un de l'autre suivant le plan d'extension du couvercle 2. Un premier corps de joint 6a est appliqué contre le boîtier 1 et un deuxième corps de joint 6b est appliqué contre la plaque supérieure 5a.

Le joint d'étanchéité 5b comporte aussi une membrane 8 qui s'étend depuis le premier corps de joint 6a vers le deuxième corps de joint 6b, et qui s'étend en prolongement du deuxième corps de joint 6b entre les plaques 5a, 5b constitutives du couvercle 2. Il est compris que le premier corps de joint 6a, le deuxième corps de joint 6b et la membrane 8 sont intégrés en un même bloc formé d'une masse cohésive en élastomère. Comme illustré sur la figure 1 et partiellement sur la vue de détail de la figure 6, le prolongement 8a de la membrane 8 est scellé conjointement à la plaque supérieure 5a et à la plaque inférieure 5c, en étant étroitement logé en compression à l'intérieur d'un espace ménagé entre la plaque supérieure 5a et la plaque inférieure 5c. En se reportant aussi à la figure 5, l'espace de séparation entre la plaque supérieure 5a et la plaque inférieure 5c est ménagé via des organes de centrage 9 du joint d'étanchéité 5b sur le couvercle 2 qui sont intégrés à la plaque supérieure 5a.

Les organes de centrage 9 s'étendent verticalement depuis la plaque supérieure 5a vers la plaque inférieure 5c, contre laquelle les organes de centrage 9 sont appliqués. Les organes de centrage 9 traversent suivant leur extension verticale le prolongement 8a de la membrane 8, via des ouvertures 10 ménagées à travers le prolongement 8a de la membrane 8 respectivement affectées aux organes de centrage 9. Les ouvertures10 que comporte le prolongement 8a de la membrane 8 sont de formes complémentaires à celles des organes de centrage 9, de sorte que la membrane 8 entoure en contact ajusté les organes de centrage 9.

Plus visible sur la figure 6, le premier corps de joint 6a est conformé en une feuillure 11 en équerre. La feuillure 11 ménage un épaulement 11a de prise d'appui du premier corps de joint 6a en bordure de la collerette 1b que comporte le boîtier 1. L'épaulement 11a du premier corps de joint 6a est prolongé par une aile de retour 11b qui s'étend verticalement - perpendiculairement à l'épaulement 11a - à distance suivant le plan d'extension du couvercle de la paroi du boîtier 1 délimitant la chambre 1a. Le deuxième corps de joint 6b comporte un flasque 12 incliné depuis sa base en direction de l'axe de mobilité A1 du couvercle 2, le flasque 12 étant scellé en périphérie de la plaque supérieure 5a.

Le joint d'étanchéité 5b comporte une gorge 7 qui s'étend entre le premier corps de joint 6a et le deuxième corps de joint 6b, en les séparant l'un de l'autre suivant le plan d'extension du couvercle 2. Par suite d'une pression exercée par un individu contre le couvercle 2, l'épaulement 11a du premier corps de joint 5b est soumis à une contrainte en flexion pour autoriser l'introduction du couvercle 2 vers l'intérieur de la chambre 1a qu'il comporte à son extrémité supérieure. La gorge 7 favorise la flexion de l'épaulement 11a du premier corps de joint 5b vers le deuxième corps de joint 6b, le flasque 12 incliné du deuxième corps de joint 6b ménageant une butée limitant l'amplitude de la déformation du joint d'étanchéité 5b en flexion. Ceci permet de limiter les contraintes auxquelles le joint d'étanchéité 5b est soumis par suite de la mise en mobilité du couvercle 2 vers l'intérieur du boîtier 1.

La plaque inférieure 5c s'étend suivant le plan d'extension du couvercle 2 en soutien de la membrane 8 jusqu'au premier corps de joint 6a contre lequel la plaque inférieure 5c est appliquée, la gorge 7 surplombant la plaque inférieure 5c. La plaque supérieure 5a et la plaque inférieure 5c forment conjointement une armature de renfort du joint d'étanchéité 5b. Il est en effet rappelé :
- ) que la plaque inférieure 5c est solidaire de la plaque supérieure 5a via le prolongement 8a de la membrane 8 qui est conjointement scellé à la plaque supérieure 5a et à la plaque inférieure 5c,
- ) que la plaque supérieure 5a est appliquée verticalement contre la plaque inférieure 5c via les organes de centrage 9 qui sont intégrés à la plaque supérieure 5a, et
- ) que la plaque inférieure 5c est appliquée contre le premier corps de joint 6a.

Sur les figures 1 et 5, l'organe de poussée 4 s'étend suivant l'axe de mobilité A1 du couvercle 2 depuis la plaque supérieure 5a vers le fût d'activation 3b, en traversant le prolongement 8a de la membrane 8 logé entre la plaque supérieure 5a et la plaque inférieure 5c, puis en traversant la plaque inférieure 5c. Pour autoriser le passage de l'organe de poussée 4 à leur travers, le prolongement 8a de la membrane 8 comporte une première fenêtre 8b et la plaque inférieure 5c comporte une deuxième fenêtre 8c. La première fenêtre 8b et la deuxième fenêtre 8c sont de mêmes conformations et sont superposées en étant centrées suivant l'axe de mobilité A1 du couvercle 2, leurs dimensions étant supérieures à l'encombrement du mécanisme 3 considéré parallèlement au plan d'extension du couvercle 2 en position de fermeture.

Sur les figures 1 et 7, le fût d'activation 3b comporte à son sommet un évidement borgne 13 de réception et de guidage de l'organe de poussée 4 suivant l'axe de mobilité A1 du couvercle 2. Par suite d'une pression exercée sur le couvercle 2 provoquant son déplacement vers l'intérieur du boîtier 1, l'organe de poussée 4 est déplacé suivant l'axe de mobilité A1 du couvercle 2 appliqué contre le fond de l'évidement borgne 13 ménagé au sommet du fût d'activation 3b. Ceci a pour effet de déplacer le fût d'activation 3b vers l'organe de crantage avec lequel le fût d'activation 3b coopère pour provoquer l'activation du mécanisme 3.

Sur la figure 7, le fût d'activation 3b comporte à sa base une denture 14 périphérique via laquelle le fût d'activation 3b coopère avec l'organe de crantage qui lui est affecté. La denture 14 est composée de dents 14a successivement distantes les unes des autres qui sont ménagées à l'extrémité inférieure d'une paroi périphérique du fût d'activation 3b. Les extrémités inférieures des dents 14a sont inclinées verticalement suivant une pente P1 qui détermine la course du couvercle 2 entre sa position de fermeture et sa position de dégagement. La pente P1 des dents 14a est calibrée pour autoriser le déplacement du couvercle 2 entre sa position de fermeture et sa position de dégagement en surplomb du boîtier 1, selon une course limitant la distance de séparation verticale entre le boîtier 1 et le couvercle 2 en position de dégagement du couvercle 2.

Au titre de ce qui précède selon une autre approche d'une description de la présente invention et des résultats techniques procurés pour répondre au problème et aux difficultés connexes qui sont posés, le couvercle est au moins composé :
- ) d'une plaque supérieure rigide, en métal de préférence, ménageant depuis l'extérieur du couvercle un organe de prise d'appui par un individu contre le couvercle pour son passage depuis sa position de fermeture vers sa position de dégagement,
- ) d'une plaque inférieure rigide, en métal de préférence, et
- ) d'un joint d'étanchéité souple et monobloc en élastomère - silicone notamment - qui ménage une interface d'étanchéité entre la tranche périphérique du couvercle et la face intérieure de la paroi du boîtier à son débouché, contre lesquelles le joint d'étanchéité est conjointement appliqué.

On notera que la plaque supérieure et la plaque inférieure sont de préférence en métal pour conforter leur robustesse comporte tenu des manoeuvres répétées et potentiellement soutenue du couvercle entre sa position de fermeture et sa position de dégagement, tout en limitant leur épaisseur au regard d'autres matériaux qui pourraient être utilisés, comme le plastique par exemple réputé moins robuste que le métal. Le joint d'étanchéité est scellé - tel que par collage notamment - conjointement à la plaque supérieure et à la plaque inférieure constitutives du couvercle. Autrement dit, le joint d'étanchéité est non seulement constitutif d'un organe de jonction étanche entre le boîtier et le couvercle, mais aussi est constitutif d'un organe d'assemblage par scellement entre la plaque supérieure et la plaque inférieure. Le couvercle composé au moins de la plaque supérieure, de la plaque inférieure et du joint d'étanchéité, forme un bloc cohésif manoeuvrable en un tout entre la position de fermeture et la position de dégagement du couvercle.

Le joint d'étanchéité intègre deux corps de joint solidaires l'un de l'autre à leur base orientée vers le boîtier, via une membrane intégrée au joint d'étanchéité. Un premier corps de joint périphérique du joint d'étanchéité est placé en application contre le boîtier et un deuxième corps de joint est placé en application contre la plaque supérieure du couvercle. Le premier corps de joint et le deuxième corps de joint sont intégrés au joint d'étanchéité à distance l'un de l'autre suivant le plan d'extension du couvercle.

Le joint intègre une membrane qui s'étend depuis le premier corps de joint vers le deuxième corps de joint, et qui comporte un prolongement depuis le deuxième corps de joint vers la plaque supérieure et la plaque inférieure du couvercle, entre lesquelles le prolongement de la membrane est comprimé et scellé conjointement à la plaque supérieure et la plaque inférieure du couvercle.

Autrement dit plus spécifiquement, le joint d'étanchéité est identifiable en ce qu'il forme un bloc cohésif globalement plan, qui est au moins composé du premier corps de joint et du deuxième corps de joint - qui sont distants l'un de l'autre suivant le plan d'extension du joint d'étanchéité - et de la membrane. La membrane est intégrée au premier corps de joint et au deuxième corps de joint, et s'étend parallèlement à la base du joint d'étanchéité orientée vers le boîtier en interposition entre la plaque supérieure et la plaque inférieure, la membrane étant logée en compression entre la plaque supérieure et la plaque inférieure auxquelles la membrane est scellée.

Globalement, le joint d'étanchéité est scellé au couvercle :
- ) d'une part par scellement du deuxième corps de joint contre la tranche périphérique de la plaque supérieure, et
- ) d'autre part par scellement du prolongement de la membrane à la plaque supérieure et à la plaque inférieure du couvercle entre lesquelles le prolongement de la membrane est comprimé et scellé.

La plaque supérieure intègre des organes de centrage du joint d'étanchéité sur le couvercle, via le prolongement de la membrane interposé entre la plaque supérieure et la plaque inférieure. Les organes de centrage - de préférence conformés en cylindre - traversent verticalement le prolongement de la membrane via des ouvertures de centrage qu'il comporte et qui sont de formes complémentaires à celles des organes de centrage. Les organes de centrage s'étendent verticalement entre la plaque supérieure à laquelle ils sont intégrés jusqu'à la plaque inférieure contre laquelle les organes de centrage sont verticalement appliqués.

Il est compris mais si besoin précisé que la notion de verticalité utilisée pour décrire l'invention est comprise comme une direction orientée parallèlement - ou confondue - à l'axe de mobilité du couvercle qui est coaxial à l'axe d'extension du mécanisme de manoeuvre logé à l'intérieur du boîtier. Les notions relatives comme supérieure et inférieure, élévation et refoulement, ou surplomb et contrebas ou encore base et sommet par exemple ou autres notions relatives apparentées, sont comprises au regard de la direction verticale - tel qu'elle vient d'être précisée - et de l'extension du boîtier depuis son fond vers son sommet. En outre il est aussi si besoin précisé ici qui le couvercle et le débouché du boîtier s'étendent suivant des plans respectifs parallèles entre eux qui sont orientés perpendiculairement à l'axe de mobilité du couvercle qui s'étend verticalement.

La compression de la membrane entre la plaque supérieure et la plaque inférieure est calibrée via les organes de centrage à un seuil de compression prédéfini du joint d'étanchéité entre elles. Le seuil de compression est prédéfini équilibré entre une compression de la membrane entre la plaque supérieure et la plaque inférieure d'une part suffisamment efficace pour l'obtention d'une immobilisation ferme du joint d'étanchéité sur le couvercle, et d'autre part une compression modérée préservant le joint d'étanchéité de manière pérenne.

On relèvera ainsi que les organes de centrage cumulent plusieurs fonctions. En effet, les organes de centrage sont constitutifs :
- ) d'organes de positionnement rigoureux du joint d'étanchéité par rapport à la plaque supérieure et à la plaque inférieure, procurant une fonction étanche efficace entre le boîtier et le couvercle,
- ) d'organes de calibrage du seuil de compression de la membrane interposée entre la plaque supérieure et la plaque inférieure, et
- ) d'organes de renfort du couvercle soumis à des efforts lors de son passage entre sa position de fermeture et sa position de dégagement, étant précisé ici que la notion de terme "entre" est comprise comme un passage du couvercle depuis sa position de fermeture vers sa position de dégagement et inversement,
- ) d'organes de renfort global du joint d'étanchéité, la plaque supérieure appliquée contre la plaque inférieure via les organes de centrage étant constitutive d'une armature de renfort du joint d'étanchéité tel que détaillé ci-après.

En effet, la plaque supérieure et la plaque inférieure forment conjointement une armature de renfort global du joint d'étanchéité :
- ) par prise d'appui direct de la plaque supérieure verticalement - ou autrement dit perpendiculairement au plan global d'extension du couvercle - contre la paque inférieure à la base du couvercle via les organes de centrage, et par scellement de la membrane conjointement à la plaque supérieure et à la plaque inférieure entre lesquelles s'étend le prolongement de la membrane autour des organes de centrage, et
- ) par un prolongement - suivant le plan d'extension du couvercle - de la plaque inférieure vers le premier corps de joint, contre lequel la plaque inférieure est appliquée.

Par ailleurs, il est ici rappelé que le boîtier comporte :
- ) une collerette de prise d'appui en bordure d'un logement d'installation du boîtier sur une paroi d'un meuble, et
- ) une chambre de réception du couvercle lorsqu'il est initialement déplacé vers l'intérieur du boîtier sous l'effet d'une pression exercée par un individu sur le couvercle, pour provoquer l'activation du mécanisme de manoeuvre du couvercle. Dans ce contexte :
- ) Le premier corps de joint est conformé en une feuillure en équerre comportant un épaulement de prise d'appui du premier corps de joint en bordure du logement contre la paroi du meuble. L'épaulement est prolongé par une aile de retour qui s'étend verticalement vers l'intérieur de la chambre à distance transversale de la paroi du boîtier, et qui intègre la membrane en zone médiane de son extension.
- ) Le deuxième corps de joint comporte un flasque incliné depuis sa base intégrant la membrane, en direction de l'axe de mobilité du couvercle. A titre indicatif non restrictif, l'inclinaison du flasque est comprise entre 50° (cinquante degrés) et 70° (soixante-dix degrés).
- ) Le premier corps de joint et le deuxième corps de joint sont séparés l'un de l'autre - suivant le plan d'extension du couvercle - par une gorge que comporte le joint d'étanchéité et qui est ménagée entre eux, la gorge définissant la distance de séparation suivant le plan d'extension du couvercle entre le premier corps de joint et le deuxième corps de joint,
- ) la plaque inférieure s'étend en soutien de la membrane vers le premier corps de joint contre lequel elle est appliquée suivant le plan global d'extension du couvercle, la gorge surplombant la plaque supérieure.

Lors d'une pression exercée par un individu contre le couvercle - via la plaque supérieure - pour activer le mécanisme de manoeuvre du couvercle, le couvercle est verticalement déplacé vers l'intérieur du boîtier à l'intérieur de la chambre qu'il comporte à son extrémité supérieure. Dans ce contexte :
- ) La distance de séparation - via la gorge - entre le premier corps de joint et le deuxième corps de joint suivant le plan d'extension du couvercle, autorise une flexion de l'épaulement du premier corps de joint vers le deuxième corps de joint.
- ) La plaque inférieure prenant appui contre l'aile de retour du premier corps de joint, l'aile est maintenue en position à distance de la paroi du boîtier, en limitant l'amplitude de la flexion de l'épaulement du premier corps de joint.
- ) Le flasque incliné que comporte le deuxième corps de joint ménage un appui de l'épaulement du premier corps de joint soumis à flexion.

Il en résulte finalement qu'une déformation excessive en flexion du premier corps de joint est évitée lors d'une manoeuvre du couvercle vers l'intérieur du boîtier par un individu exerçant une pression contre le couvercle. Les contraintes en déformation du joint d'étanchéité sont ainsi limitées ce qui permet d'accroître la pérennité du joint d'étanchéité.

Par ailleurs tel que précédemment mentionné, le couvercle est équipé d'un organe de poussée coopérant - sous l'effet d'une pression exercée par un individu sur le couvercle - avec fût d'activation du mécanisme de manoeuvre du couvercle, pour initier l'activation du mécanisme de manoeuvre provoquant le déplacement du couvercle depuis sa position de fermeture vers sa position de dégagement.

L'organe de poussée est intégré à la plaque supérieure, la membrane et la plaque inférieure comportant des fenêtres respectives superposées de passage à leur travers de l'organe de poussée, autorisant la prise d'appui de l'organe de poussée contre le fût d'activation sous l'effet d'une pression exercée par un individu sur le couvercle. Les fenêtres s'étendent chacune suivant le plan d'extension du couvercle suivant une dimension légèrement supérieure à l'encombrement transversal du mécanisme de manoeuvre. Ceci permet d'éviter que le couvercle ne heurte inopportunément le fût d'activation lors d'un déplacement du couvercle vers l'intérieur de la chambre ménagée à l'intérieur du boîtier. Par ailleurs, le fût d'activation comporte en périphérie de sa base une denture s'étendant autour de l'axe de mobilité du couvercle. La denture est composée d'une pluralité de dents verticalement inclinées, qui coopèrent avec les crans d'un organe cranté que comporte le mécanisme pour mouvoir le couvercle en pivotement autour de son axe de mobilité entre sa position de fermeture et sa position de dégagement. Pour limiter un affaiblissement du joint et favoriser sa pérennité malgré les manoeuvres répétées du couvercle par un individu initiant l'activation du mécanisme de manoeuvre, la course optimale du couvercle entre sa position de fermeture et sa position de dégagement est limitée par le fût d'activation du mécanisme de manoeuvre du couvercle via la denture qu'il comporte à sa base.

A cet effet, les dents composant la denture sont inclinées verticalement suivant une faible pente comprise - à titre indicatif non restrictif - entre 15° (quinze degrés) et 20° (vingt degrés). Une course excessive du couvercle est ainsi évitée, en étant calibrée par l'inclinaison verticale des dents composant la denture que comporte le fût d'activation à sa base. La course du couvercle est ainsi bornée par le fût d'activation entre une application ferme et efficace du joint d'étanchéité contre le boîtier en station de clôture, et une émergence du couvercle hors du boîtier en position de dégagement.

La course du couvercle depuis sa position de fermeture vers sa position de dégagement est ainsi ajustée à minima en positionnant correctement le couvercle suivant son axe de mobilité en surplomb du boîtier, à faible distance de séparation verticale entre le boîtier et le couvercle en position de dégagement. Ceci permet de limiter encore les contraintes supportées par le joint d'étanchéité lors des manoeuvres du couvercle entre sa position de fermeture et sa position de clôture. Ceci permet aussi d'améliorer l'ergonomie du boîtier en limitant l'encombrement vertical du couvercle en position de dégagement.

Il est bien évidement compris mais si besoin précisé ici qu'une telle pente faiblement inclinée par rapport à l'axe de mobilité du couvercle - d'un angle inférieur à 20° (vingt degrés) par exemple - est définie :
- ) d'une part entre la course du couvercle vers l'intérieur du boîtier lorsqu'il est soumis à une pression exercée par un individu pour initier l'activation du mécanisme par prise d'appui de l'organe de poussée contre le fût d'activation,
- ) et d'autre part inversement - sous l'effet de l'activation du mécanisme - de cette même course additionnée d'une émergence du couvercle hors du boîtier de quelques millimètres n'excédant pas de préférence un centimètre, suffisante pour que l'individu puisse accéder sans gêne aux prises logées à l'intérieur du boîtier.

Par ailleurs encore, la plaque supérieure du couvercle ménage l'interface ergonomique entre le couvercle et un individu appliquant une poussée contre le couvercle pour activer le mécanisme de manoeuvre du couvercle provoquant son passage depuis sa position de fermeture vers sa position de dégagement. Il est opportun que la poussée exercée par l'individu sur le couvercle soit rigoureusement coaxiale à l'axe de mobilité du couvercle, pour éviter une potentielle mise en guingois inopportune du couvercle à l'intérieur de la chambre.

A cet effet, la plaque supérieure du couvercle comporte suivant l'axe de mobilité du couvercle, un relief en cuvette dimensionnée au doigt d'un individu. Un tel relief procure une assistance ergonomique à l'individu, en le guidant dans son geste de poussée du couvercle sa mise en mobilité vers la chambre suivant l'axe de mobilité, à l'encontre d'un risque d'une mise en guingois du couvercle pouvant provoquer une défaillance de prise d'appui de l'organe de poussée contre le fût d'activation suivant l'axe d'extension du mécanisme de manoeuvre du couvercle.

La description ci-dessus n'est pas limitative. L'invention couvre d'autre modes de réalisation du dispositif selon l'invention. Dans l'exemple des figures 8 et 9, le joint d'étanchéité diffère du joint présenté dans le mode de réalisation présenté aux figures 1 et 6. Dans le mode de réalisation présenté aux figures 8 et 9, le joint d'étanchéité 5b est monobloc élastiquement déformable en élastomère - à base de silicone notamment - et une plaque inférieure 5c. La plaque supérieure 5a est superposée à la plaque inférieure 5c suivant l'axe de mobilité du couvercle 2, le joint d'étanchéité 5b s'étendant en périphérie du couvercle 2 en interposition entre la plaque supérieure 5a et la plaque inférieure 5c. Le joint d'étanchéité 5b intègre deux corps de joint 6a, 6b distants l'un de l'autre suivant le plan d'extension du couvercle 2. Le premier corps de joint 6a est appliqué contre le boîtier 1 et le deuxième corps de joint 6b est appliqué contre la plaque supérieure 5a. Toutefois, en comparaison du joint d'étanchéité présenté aux figures 1 et 6, le premier corps de joint 6a appliqué contre le boîtier est plus large.

Comme illustré sur la figure 1 et partiellement sur la vue de détail de la figure 6, le prolongement 8a de la membrane est scellé conjointement à la plaque supérieure 5a et à la plaque inférieure 5c, en étant étroitement logé en compression à l'intérieur d'un espace ménagé entre la plaque supérieure 5a et la plaque inférieure 5c.

Le premier corps de joint 6a est conformé en une feuillure. Cependant, la feuillure n'est pas conformée en équerre, comme dans le mode de réalisation présenté aux figures 1 et 6. Dans le mode de réalisation présenté aux figures 8 et 9, la feuillure est conformée en pince. Elle ménage un épaulement 11a de prise d'appui du premier corps de joint 6a en bordure de la collerette que comporte le boîtier 1. L'épaulement 11a du premier corps de joint 6a est prolongé par une aile de retour 11b qui s'étend non seulement verticalement - perpendiculairement à l'épaulement 11a - mais qui se prolonge - horizontalement - dans la direction de cet épaulement 11a. Par ailleurs, comme dans le mode de réalisation présenté aux figures 1 et 6, le joint d'étanchéité 5b du mode de réalisation présenté aux figures 8 et 9 comporte une gorge 7 qui s'étend entre le premier corps de joint 6a et le deuxième corps de joint 6b, en les séparant l'un de l'autre suivant le plan d'extension du couvercle 2.

## Revendications

1. Dispositif de jonction étanche entre un boîtier (1) comportant dans son volume intérieur au moins un logement (2a, 2b) d'une prise électrique, et un couvercle (2) escamotable qui est installé à un débouché (1c) d'une chambre (1a) supérieure du boîtier (1) ouverte sur l'environnement extérieur du boîtier (1), le dispositif comprenant le boîtier (1) et le couvercle (2), le débouché (1c) autorisant un accès à la ou les prises logées dans le boîtier (1), le boîtier (1) comportant une collerette (1b) d'application du boîtier (1) contre une paroi en bordure d'un logement de réception du boîtier (1) que comporte la paroi, le couvercle (2) étant monté mobile sur le boîtier (1) entre une position de fermeture du débouché (1c) du boîtier (1) interdisant un accès à la ou les prises, et une position de dégagement du débouché (1c) du boîtier (1) autorisant un accès à la ou les prises, le boîtier (1) logeant un mécanisme (3) de manoeuvre du couvercle (2) depuis sa position de fermeture vers sa position de dégagement, le couvercle (2) étant déplaçable vers sa position de dégagement suivant un axe de mobilité (A1) coaxial à un axe d'extension du mécanisme (3) de manoeuvre du couvercle (2) d'une part en élévation en étant disposé en surplomb du boîtier (1) et d'autre part en pivotement en dégageant un accès à la ou les prises à travers le débouché (1c) du boîtier (1), le couvercle (2) étant muni d'un organe de poussée (4) coopérant suivant l'axe de mobilité (A1) du couvercle (2) avec un fût d'activation (3b) du mécanisme (3) sous l'effet d'une pression exercée par un individu contre la face supérieure du couvercle (2) en position de fermeture, **caractérisé en ce que** le couvercle (2) comprend deux plaques superposées, dont une plaque supérieure (5a) et une plaque inférieure (5c), et un joint d'étanchéité (5b) monobloc en élastomère s'étendant en périphérie du couvercle (2) en interposition entre la plaque supérieure (5a) et la plaque inférieure (5c), le joint d'étanchéité (5b) intégrant deux corps de joint (6a, 6b) distants l'un de l'autre suivant un plan d'extension du couvercle (2), dont un premier corps de joint (6a) appliqué contre le boîtier (1) et un deuxième corps de joint (6b) appliqué contre la tranche périphérique de la plaque supérieure (5a), le joint d'étanchéité (5b) intégrant en outre une membrane (8) qui s'étend depuis le premier corps de joint (6a) vers le deuxième corps de joint (6b) et qui comporte un prolongement (8a) depuis le deuxième corps de joint (6b) qui s'étend en compression entre la plaque supérieure (5a) et la plaque inférieure (5c).

2. Dispositif selon la revendication 1, **caractérisé en ce que** le joint d'étanchéité (5b) est constitutif d'un organe d'assemblage par scellement entre la plaque supérieure (5a) et la plaque inférieure (5c), le prolongement (8a) que comporte la membrane (8) étant scellé à l'une et l'autre de la plaque supérieure (5a) et de la plaque inférieure (5c), le couvercle (2) composé au moins de la plaque supérieure (5a), de la plaque inférieure (5c) et du joint d'étanchéité (5b) formant un bloc cohésif manoeuvrable en un tout entre la position de fermeture et la position de dégagement du couvercle (2).

3. Dispositif selon l'une quelconque des revendications 1 et 2, **caractérisé en ce que** le premier corps de joint (6a) est conformé en une feuillure (11) en équerre comportant au moins un épaulement (11a) de prise d'appui vertical du premier corps de joint (6a) en bordure de la collerette (1b) que comporte le boîtier (1), l'épaulement (11a) étant prolongé par une aile de retour (11b) qui s'étend vers l'intérieur de la chambre (1a) à distance de la paroi du boîtier (1) suivant le plan d'extension du couvercle (2), l'aile de retour (11b) intégrant la membrane (8) à sa périphérie en zone médiane de l'extension verticale de l'aile de retour (11b),
**en ce que** le deuxième corps de joint (6b) comporte au moins un flasque (12) incliné en direction de l'axe de mobilité (A1) du couvercle (2) depuis sa base à laquelle la membrane (8) est intégrée, le premier corps de joint (6a) et le deuxième corps de joint (6b) étant séparés l'un de l'autre suivant le plan d'extension du couvercle (2) par une gorge (7) que comporte le joint d'étanchéité (5b) et qui est ménagée entre eux en surplomb de la plaque inférieure (5c) du couvercle (2).

4. Dispositif selon l'une quelconque des revendications 1 à 3, **caractérisé en ce que** la plaque inférieure (5c) s'étend en soutien de la membrane (8) vers le premier corps de joint (6a) contre lequel la plaque inférieure (5c) est transversalement appliquée suivant le plan d'extension du couvercle (2).

5. Dispositif selon l'une quelconque des revendications 1 à 4, **caractérisé en ce que** le joint d'étanchéité (5b) est scellé conjointement à la plaque supérieure (5a) et à la plaque inférieure (5c) du couvercle (2) d'une part par scellement du deuxième corps de joint (6b) contre la tranche de la plaque supérieure (5a), et d'autre part par scellement du prolongement (8a) de la membrane (8) à la plaque supérieure (5a) et à la plaque inférieure (5c) du couvercle (2) entre lesquelles le prolongement (8a) de la membrane (8) est comprimé et scellé.

6. Dispositif selon l'une quelconque des revendications 1 à 5, **caractérisé en ce que** la plaque supérieure (5a) intègre des organes de centrage (9) du joint d'étanchéité (5b) sur le couvercle (2), qui traversent verticalement le prolongement (8a) de la membrane (8) via des ouvertures (10) qu'il comporte et qui sont de formes complémentaires à celles des organes de centrage (9), les organes de centrage (9) s'étendant verticalement vers la plaque inférieure (5c) contre laquelle les organes de centrage (9) sont appliqués, les organes de centrage (9), dont l'extension verticale détermine la distance de séparation verticale entre la plaque supérieure (5a) et la plaque inférieure (5c), étant constitutifs d'un moyen de calibrage de la compression de la membrane (8) entre la plaque supérieure (5a) et la plaque inférieure (5c) à un seuil de compression prédéfini.

7. Dispositif selon l'une quelconque des revendications 1 à 6, **caractérisé en ce que** la plaque supérieure (5a) et la plaque inférieure (5c) forment conjointement une armature de renfort global du joint d'étanchéité (5b), par prise d'appui direct de la plaque supérieure (5a) verticalement contre la plaque inférieure (5c) et par un prolongement de la plaque inférieure (5c) suivant le plan d'extension du couvercle (2) vers le premier corps de joint (6a) contre lequel la plaque inférieure (5c) est appliquée.

8. Dispositif selon l'une quelconque des revendications 1 à 7, **caractérisé en ce que** la plaque supérieure (5a) intègre l'organe de poussée (4) équipant le couvercle (2), la plaque inférieure (5c) et la membrane (8) comportant des fenêtres (8b, 8c) respectives qui sont superposées et qui ménagent un passage de l'organe de poussée (4) verticalement à leurs travers, la dimension d'extension des fenêtres (8b, 8c) suivant le plan d'extension du couvercle (2) en position de fermeture étant supérieure à l'encombrement transversal du mécanisme (3) de manoeuvre considéré parallèlement au plan d'extension du couvercle (2) en position de fermeture.

9. Dispositif selon l'une quelconque des revendications 1 à 8, **caractérisé en ce que** le fût d'activation (3b) comporte en périphérie de sa base une denture (14) qui s'étend autour de l'axe de mobilité (A1) du couvercle (2) et qui est composée d'une pluralité de dents (14a) dont les extrémités inférieures sont verticalement inclinées, les dents (14a) coopérant avec les crans d'un organe cranté que comporte le mécanisme (3), la denture (14) étant en outre constitutive d'un moyen de calibrage de la course du couvercle (2) qui est bornée entre une application ferme du joint d'étanchéité (5b) verticalement contre le boîtier (1) et une émergence minimale du couvercle (2) hors du boîtier (1) en position de dégagement du couvercle (2).

10. Dispositif selon l'une quelconque des revendications 1 à 9, **caractérisé en ce que** la plaque supérieure (5a) du couvercle (2) comporte un relief en cuvette (5) dimensionnée au doigt d'un individu, qui est coaxial à l'axe de mobilité (A1) du couvercle (2).
